# EUROPÄISCHE PATENTSCHRIFT

(11) **EP 0 825 429 B1**
(45) Veröffentlichungstag und Bekanntmachung des Hinweises auf die Patenterteilung: **29.10.2003**
(21) Anmeldenummer: 97113809.4
(22) Anmeldetag: 09.08.1997
(51) Int. Cl.: G01M 1/04, F16F 15/08, F16C 27/06

(54) **Lagereinrichtung**
Bearing unit
Ensemble de palier

(30) Priorität: 15.08.1996 DE 19632786
(43) Veröffentlichungstag der Anmeldung: 25.02.1998
(73) Patentinhaber: Schenck RoTec GmbH, 64293 Darmstadt (DE)
(72) Erfinder: Thelen, Dieter, Dr., 64397 Modautal (DE); Stork, Michael, 64291 Darmstadt (DE)
(74) Vertreter: Brandt, Ernst-Ulrich, Dipl.-Phys., Dipl.-Ing.

(56) Entgegenhaltungen:
- DE-A- 2 809 453
- DE-A- 4 234 434
- US-A- 5 509 667
- PATENT ABSTRACTS OF JAPAN vol. 10, no. 256 (P-493) [2312], 2. September 1986 & JP 61 084539 A (MATSUSHITA ELECTRIC IND CO LTD), 30. April 1986

## Beschreibung

Die Erfindung bezieht sich auf eine Lagereinrichtung für einen in einer Einrichtung zur Ermittlung der Unwucht zu lagernden Rotor mit einem an einem nichtrotierenden Abstützteil angeordneten Lagerelement für den Rotor, wobei unwuchtinduzierte Schwingungen des seinerseits über ortsfest gehaltene federnde Elemente abgestützten Abstützteils zur Ermittlung der Unwucht herangezogen werden.

Auszuwuchtende Rotoren werden in Auswuchtmaschinen meist über Tragrollen oder mittels einer Lagerspindel gelagert, wobei Wälzlager oder Gleitlager zur Lagerung der Tragrollen oder der Lagerspindel zum Einsatz kommen können.

Eine Lagereinrichtung der eingangs genannten Art ist aus der JP 61 084 539 A bekannt, die eine Auswuchtmaschine offenbart, bei der der Rotor in einem Gleitlager, das an einem nichtrotierenden Abstützteil in Form eines Schwingtisches angeordnet ist, gelagert ist. Der Schwingtisch ist über am Maschinenrahmen ortsfest gehaltene federnde Elemente in Form von Blattfedern schwingfähig abgestützt. Die unwuchtinduzierten Schwingungen des Schwingtisches werden zur Ermittlung der Unwucht herangezogen. Um beim Hochlaufen des Rotors auf Meßdrehzahl insbesondere bei Rotoren mit großer Unwucht schnell ein stabiles Schwingverhalten zu erreichen, sind zwischen Schwingtisch und Maschinenrahmen schwingungsdämpfende Gummielemente angeordnet.

Aus der US-A-5 509 667 ist der Einsatz von Metall-Elastomer-Verbundbauteilen für einen schwingungsdämpfenden Toleranzring bei der Befestigung eines Wälzlagers für eine Welle, die eine Wandung durchsetzt, bekannt.

Sollen Rotoren bei Drehzahlen, die in der Nähe von kritischen Drehzahlen liegen, bei denen Systemresonanzen des Systems Rotor/Lagerung angeregt werden können, ausgewuchtet bzw. kontrolliert werden, sind Maßnahmen erforderlich, mit denen gefährliche Resonanzvergrößerungen vermieden werden, wobei gleichzeitig keine Zwangskräfte im System Rotor/Lagerung auftreten sollen.

Zur Vermeidung von Resonanzüberhöhungen ist aus der deutschen Offenlegungsschrift DE-OS 21 41 502 bekannt, Mittel vorzusehen, durch die sich die Eigenschwingungszahlen des Systems Rotor/ Lagerung einer Auswuchtmaschine verändern lassen. Die Eigenschwingungszahlen können dann so gesteuert werden, daß das Durchfahren von Resonanzspitzen vermieden wird. Nach der DE-OS 21 41 502 sind zusätzliche Stützen auf der einen Seite an dem Maschinenfundament kraft- und formschlüssig fest verankert, während sie am anderen Ende über eine fernsteuerbare Reibverbindung zur zeitweisen Verstimmung des Systems Rotor/Lagerung mit dem die Tragrollen oder die Lagerspindel abstützenden Lagergehäuse verbunden sind. Die Einrichtung nach der DE-OS 21 41 502 ist durch die zusätzlich erforderlichen Stützen jedoch aufwendig und kostenintensiv.

Der Erfindung liegt daher die Aufgabe zugrunde, eine einfache und kostengünstige Lagerung für auszuwuchtende Rotoren vorzusehen, die ein sicheres zwangskraftfreies Auswuchten bzw. Kontrollieren des Rotors bei verschiedensten Drehzahlen ermöglicht.

Erfindungsgemäß wird diese Aufgabe durch die Merkmale des Patentanspruchs 1 gelöst. Auf einfachste Weise erhält man. so durch die Verformung des schwingungsdämpfenden Elements eine wirksame Dämpfung, ohne daß die dynamische Lagersteifigkeit wesentlich gemindert wird bzw. ohne daß im Drehzahlbereich nahe der kritischen Drehzahlen Phasenfehler die zur Ermittlung der Unwucht gemessenen Schwingungen verfälschen.

Eine Ausführungsform, bei der das schwingungsdämpfende Element ein Elastomerteil, d. h. elastisch verformbar ist, weist ein besonders geringes Bauvolumen auf und ist kostengünstig herstellbar. Eine Ausführungsform, bei der das elastisch verformbare schwingungsdämpfende Element als Metall-Elastomer-Verbundbauteil ausgebildet ist, ist robust in der Handhabung und im Einsatz und läßt sich darüberhinaus mit großer Genauigkeit herstellen. Die Elastomerteile sind so auszulegen, daß sich die Dämpfung des Gesamtsystems Rotor/Lagerung um den Faktor 2-3 vergrößert.

Sieht man vor, daß das schwingungsdämpfende Element zur Einstellung einer Vorspannung definiert kraftbeaufschlagbar ist, so läßt sich auf einfachste Weise eine Einstellung der Dämpfung erreichen, die insbesondere bei Verstellung einer hydraulischen Vorspannung auf einfachste Weise eine Anpassung an unterschiedliche kritische Drehzahlen oder Drehzahlbereiche und eine Vermeidung von Zwangskräften ermöglicht.

Dadurch, daß zwei im Querschnitt L-förmige Metall-Elastomer-Ringelemente das schwingungsdämpfende Element bilden, ist eine kostengünstige Herstellung und Lagerhaltung möglich. Besonders einfach herstellbar ist eine mehrteilige Ausführungsform, bei der zur Dämpfung in axialer Richtung zwei beispielsweise durch Ausstanzen herstellbare Elastomer-Ringscheiben und ein Elastomer-Ringelement vorgesehen sind.

Bei einer Ausführungsform, bei der das Lagerelement für den Rotor zwei Tragrollen umfaßt, ist ein mehrteiliges schwingungsdämpfendes Zwischenelement einfach zu montieren.

Weitere vorteilhafte Ausführungsformen ergeben sich aus den abhängigen Ansprüchen und aus der nachfolgenden Beschreibung.

Die Erfindung wird nachstehend mit Bezug auf die Zeichnung näher erläutert. Es zeigen:
- Fig. 1: die erfindungsgemäße Spindellagerung einer Auswuchtmaschine
- Fig. 2: eine weitere Ausgestaltung einer erfindungsgemäßen Spindellagerung
- Fig. 3 und Fig. 3a: Lagerstellen nach der Erfindung
- Fig. 4: eine weitere Ausgestaltung einer erfindungsgemäßen Lagerstelle
- Fig. 5: eine erfindungsgemäße Tragrollenlagereinheit einer Auswuchtmaschine
- Fig. 6: einen Teilschnitt längs der Linie VI-VI in Fig. 5
- Fig. 7: einen Teilschnitt längs der Linie VII-VII in Fig. 5
- Fig. 8: eine weitere Ausführungsform einer Lagerung
- Fig. 9: eine weitere Ausführungsform einer Lagerung nach der Erfindung
- Fig. 10: eine weitere Ausführungsform einer Lagerung nach der Erfindung

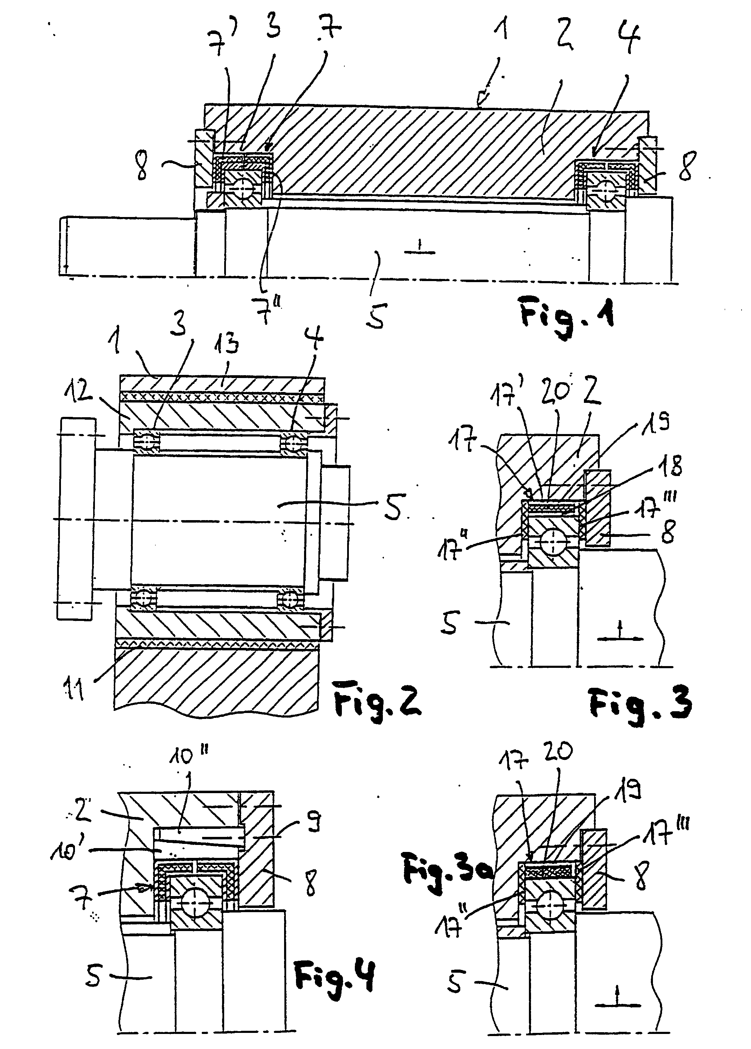

In Fig.1 und Fig. 2 ist jeweils eine Spindellagerung einer nicht näher dargestellten, in üblicher Weise aufgebauten Auswuchtmaschine mit 1 bezeichnet. Die Spindellagerung 1 als nichtrotierendes Abstützteil ist über nicht dargestellte federnde Abstützelemente am Maschinenbett abgestützt. Die Spindellagerung 1 weist ein Gehäuse 2 auf, in dem Lagerungen 3,4 für die Lagerung der Spindelwelle 5 vogesehen sind. Auf der Spindelwelle 5 wird in üblicher Weise der auszuwuchtende bzw. zu kontrollierende Rotor befestigt. Die Lagerungen 3,4 weisen Wälzlager auf, die mit dem Innenring auf der Spindelwelle 5 angeordnet sind. Der Außenring jedes Wälzlagers ist über ein im dargestellten Ausführungsbeispiel nach Fig. 1 zweiteiliges schwingungsdämpfendes Zwischenelement 7 im Gehäuse abgestützt. Das schwingungsdämpfende Zwischenelement 7 ist definiert elastisch in radialer und axialer Richtung und weist zwei vorzugsweise gleich ausgebildete Ringelemente 7'und 7'' auf, die im Querschnitt L-förmig mit einem Mantelabschnitt und einem Bodenabschnitt ausgebildet sind; der Mantelabschnitt umgibt den Außenring des Wälzlagers, während der Bodenabschnitt in axialer Richtung am Außenring des Wälzlagers anliegt. Jedes Ringelement 7',7'' besteht aus einem metallischen Innen- und Außenring, die vorzugsweise als Drehteile, die noch nicht Fertigmaße aufweisen, vorgefertigt werden. Diese Ringe werden beabstandet in eine Vorrichtung eingelegt und ein elastomeres Material in den Zwischenraum eingebracht, das nach der geforderten Steifigkeit bzw. Dämpfung ausgewählt wird. Die Füllung kann z. B. durch Ausspritzen mit Gummi (Gummi-Metall-Verbindung) oder durch Ausgießen mit Polyurethan erfolgen. Die Gummi-Metall-Kombination wird besonders bei hohen Stückzahlen eingesetzt.

Die Wälzlager sind in üblicher Weise über Befestigungsringe 8 in axialer Richtung fixiert.

In der in Fig. 2 dargestellten Weise kann die Spindellagerung 1 auch mit üblichen Wälzlagerungen versehen werden und ein schwingungsdämpfendes Zwischenelement als Zwischenhülse 11 zwischen Innen- 12 und Außenbereichen 13 der Spindellagerung 1 vorgesehen werden. Mit anderen Worten ist dieses Zwischenelement in Form einer zylindrischen Hülse 11 zwischen dem inneren Bereich des Gehäuses mit den Lagerstellen und dem äußeren Bereich des Gehäuses, an dem die federnde Abstützung der Spindellagerung angreift, angeordnet.

In Fig. 3 ist ein konstruktiv vereinfachtes, dreiteiliges schwingungsdämpfendes Zwischenelement 17 dargestellt, bei dem die Funktionen axiale und radiale Nachgiebigkeit jeweils getrennten Elementen zugeordnet sind. Das Zwischenelement 17 weist hierzu ein den Außenring des Wälzlagers umschließendes Ringelement 17' und zwei Ringscheiben 17'' und 17''', die axial gegen den Außenring anlegbar sind, auf. Die beiden Ringscheiben 17'' und 17''' sind aus elastomerem Material ausgestanzt. Das Ringelement 17' besteht aus einem metallischen Innen- und Außenring 18,19 und einem dazwischenliegenden elastomeren Ring 20. Bei der Ausführungsform nach Fig. 3a ist unter Wegfall des den Außenring des Wälzlagers umschließenden Innenringes 18 des Ringelements der elastomere Ring 20 direkt auf dem Außenring des Wälzlagers aufgebracht.

Das schwingungsdämpfende Zwischenelement kann statt zwischen Außenring des Wälzlagers und Gehäuse auch zwischen Innenring des Wälzlagers und Spindelwelle angeordnet werden.

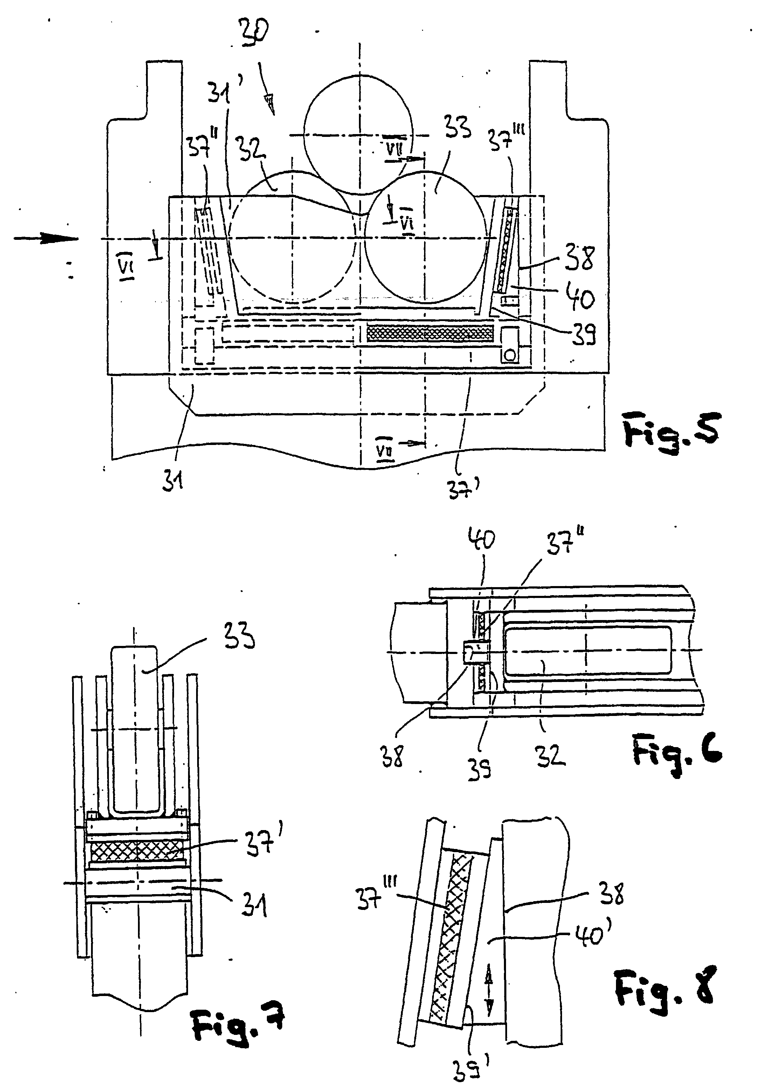

In Fig. 5 ist der Teilschnitt einer Tragrollenlagerung nach der Erfindung dargestellt. Die Tragrollenlagereinheit 30 als nichtrofierendes Abstützteil ist dabei in üblicher, nicht näher dargestellter Weise über federnde Abstützelemente am Maschinenbett einer Auswuchtmaschine abgestützt, wobei im allgemeinen zwei oder mehr Tragrollenlagereinheiten vorgesehen sind.

Die Tragrollenlagereinheit 30 umfaßt einen Rahmen 31', in dem zwei Tragrollen 32,33 gelagert sind. Auf den Tragrollen 32 und 33 ist der Rotor mittels z. B. eines Rotorzapfens abgestützt. In vertikaler Richtung sind die Tragrollen 32,33 mit dem Rahmen 31', wie aus den Fig. 5 und 7 ersichtlich, über das schwingungsdämpfende Zwischenelement 37' am Grundrahmen 31 abgestützt. Die schwingungsdämpfenden Zwischenelemente 37'' und 37''' sind zwischen zwei zur Vertikalen schräg verlaufenden Flächen abgestützt. Die gesamte Abstützung erfolgt an wannenförmig angeordneten Stützflächen des Grundrahmens 31. Infolge Verschiebung eines Verstellkeils 40 auf den beiden dem Zwischenelement 37'' bzw. 37''' benachbarten Abstützflächen 38 am Grundrahmen 31 und 39 am Tragrollenlager-Rahmen 31' in senkrechter Richtung durch vorzugweise fluidische Betätigung läßt sich die Beweglichkeit der Elastomerelemente 37'' und 37 ''' blockieren. Auf einfachste Weise ist es so möglich, durch Öffnen der Verstellkeile 40 eine wirksame Dämpfung einzustellen, ohne daß die dynamische Lagersteifigkeit wesentlich gemindert wird bzw. ohne daß im Drehzahlbereich nahe der kritischen Drehzahl Phasenfehler die zur Ermittlung der Unwucht gemessenen Schwingungen verfälschen.

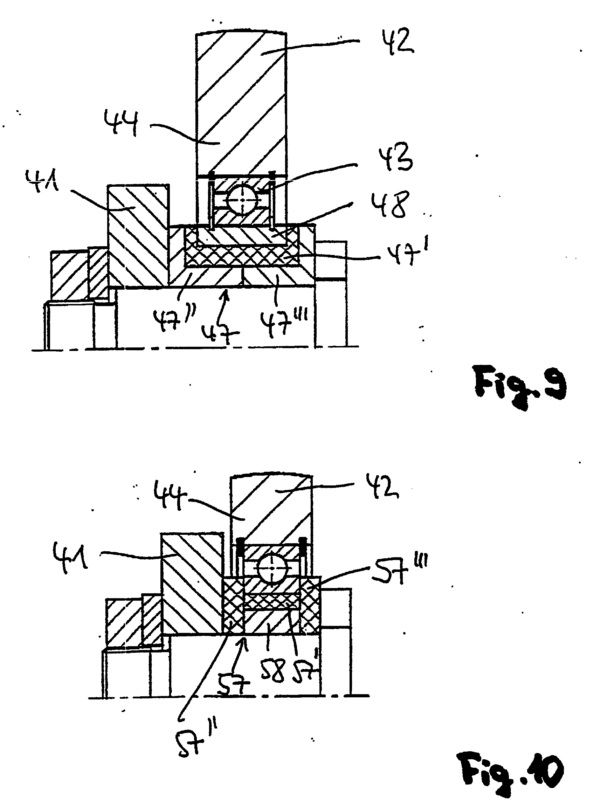

Auch in der Ausführungsform gemäß Fig. 8 sind die schwingungsdämpfenden Zwischenelemente 37'' und 37''' zwischen zwei zur Vertikalen schräg verlaufenden Flächen abgestützt und die gesamte Abstützung der Tragrollenlagereinheit 30 erfolgt an wannenförmig angeordneten Stützflächen des Grundrahmens 31. Der Verstellkeil 40' ist bei dieser Ausführungform auf der dem Zwischenelement 37'' bzw. 37''' benachbarten Abstützfläche 38 am Grundrahmen 31 und der Abstützfläche 39' am Zwischenelement 37'' bzw. 37''' verschiebbar. Infolge Verschiebung des Verstellkeils 40 in senkrechter Richtung durch vorzugsweise flüidische Betätigung läßt sich auf das Elastomerelement des schwingungsdämpfenden Zwischenelements 37'' bzw. 37''' eine Vorspannung aufbringen bzw. abbauen. Auf einfachste Weise ist es so möglich, eine wirksame Dämpfung einzustellen, ohne daß die dynamische Lagersteifigkeit wesentlich gemindert wird bzw. ohne daß im Drehzahlbereich nahe der kritischen Drehzahl Phasenfehler die zur Ermittlung der Unwucht gemessenen Schwingungen verfälschen. Eine Steuerung der fluidischen Vorspannungsverstellung vorzugsweise auch für die Abstützung in vertikaler Richtung läßt auf einfachste Weise eine Einstellung der Dämpfung zu, die unterschiedlichen kritischen Drehzahlen oder Drehzahlbereichen sowie der Vermeidung von Zwangskräften Rechnung trägt.

Auch bei der Lagerung der Spindelwelle 5 nach Fig. 1 läßt sich, wie aus Fig. 4 ersichtlich, auf das Elastomerelement des schwingungsdämpfenden Zwischenelements eine definierte Vorspannung aufbringen bzw. abbauen. Zwischen Gehäuse 2 und Außenumfang des zweiteiligen elastischen Zwischenelements 7 ist eine verstelleinrichtung angeordnet, die aus zwei ineinander greifenden Hülsen 10' und 10'' besteht, von denen die innere 10' eine konische Außenfläche und die äußere 10'' eine konische Innenfläche aufweist. Die innere Hülse 10' ist zudem so ausgebildet, daß sie in der Art einer Spannfutterhülse im Durchmesser in geringem Umfang veränderbar ist. Wird beispielsweise die äußere Hülse 10'' axial, z. B. durch Verstellschrauben 9 oder hydraulischen Druck gegen die innere Hülse 10' verschoben, läßt sich über die innere Hülse 10' eine bei Bedarf auch regelbare Vorspannung auf den elastomeren Bereich des zweiteiligen Zwischenelements 7 einstellen, bzw. abbauen. Über ähnliche Ein-, richtungen läßt sich bei Bedarf auch eine axiale Vorspannung einstellen.

Auch bei der Ausführungsform nach Fig. 2 läßt sich in analoger, nicht dargestellter Weise auf das schwingunsdämpfende Zwischenelement, die Zwischenhülse 11, eine definierte, bei Bedarf auch regelbare Vorspannung aufbringen bzw. abbauen. Dazu ist beispielsweise zwischen dem äußeren Bereich 13 des Gehäuses 1, an dem die federnde Abstützung der Spindellagerung angreift und dem Außenumfang der Zwischenhülse 11 eine Verstelleinrichtung angeordnet, die im Prinzip wie die in Fig. 4 dargestellte Verstelleinrichtung aufgebaut ist und in analoger Weise arbeitet, also eine innere Hülse mit konischer Außenfläche und eine äußere Hülse mit konischer Innenfläche aufweist. Es versteht sich von selbst, daß die Verstelleinrichtung auch zwischen dem Innenumfang der Zwischenhülse 11 und dem inneren Bereich 12 des Gehäuses 1 angeordnet sein kann.

Anstelle der in Fig. 5 dargestellten wannenförmigen Abstützung des Rahmens 31' mit den Tragrollen 32, 33 über die schwingungsdämpfenden Zwischenelemente 37', 37'' und 37''' am Grundrahmen 31 kann in einer weiteren Ausführungsform der Erfindung eine Bedämpfung in der Lagerung der Tragrollen 32, 33 selbst vorgesehen sein, wie dies in den Figuren 9 und 10 näher dargestellt ist.

In den Figuren 9 und 10 ist die Lagerung der Tragrollen für den Rotor an einer Tragrollenlagereinheit 41 der Auswuchtmaschine dargestellt. Die Tragrollenlagereinheit 41 als nichtrotierendes Abstützteil ist in üblicher nicht näher dargestellter Weise über federnde Abstützelemente am Maschinenbett einer Auswuchtmaschine abgestützt, wobei im allgemeinen zwei oder mehr Tragrollenlagereinheiten vorgesehen sind.

Jede Tragrolle 42 ist über Wälzlager 43 und ein schwingungsdämpfendes Zwischenelement 47 an einer Tragrollenlagereinheit 41 abgestützt. Auf dem Wälzlageraußenring ist der Tragrollenring 44, auf dem der Rotor oder Rotorzapfen aufliegt, angebracht. Am Wälzlagerinnenring ist das schwingungsdämpfende Zwischenelement 47 angeordnet, das definiert elastisch in radialer und axialer Richtung ist. Das Zwischenelement 47 weist in Fig. 9 einen Metallring 48 , auf dem der Wälzlagerinnenring sitzt, sowie zwei im Querschnitt L-förmig ausgebildete Ringelemente 47'' und 47''' auf; der Mantelabschnitt umgibt mit Abstand den Metallring 48 während der Bodenabschnitt einen Abstand zur Stirnfläche des Metallrings 48 aufweist. Der Abstand ist jeweils überbrückt durch eine Füllung 47' aus elastomerem Material. Die Füllung wird in einer Vorrichtung, in der die Teile auf vorbestimmtem Abstand gehalten werden, durch Ausgießen der Zwischenräume mit Polyurethan oder durch Einspritzung von Gummi in die Zwischenräume hergestellt. Die Tragrolle 42 wird durch eine geeignete Einrichtung, beispielsweise eine Verschraubung, die das Zwischenelement 47 und die Tragrolle 42 durchsetzt, an der Tragrollenlagereinheit 41 befestigt.

Das schwingungsdämpfende Zwischenelement 57 nach Fig. 10 ist mehrteilig aufgebaut, ähnlich wie das Zwischenelement 17 nach Fig. 3a. Ein elastomerer Ring 57' ist direkt auf dem Wälzlagerinnenring aufgebracht. Zwei Ringscheiben 57'' und 57''' liegen axial am Wälzlagerinnenring an; sie sind durch Ausstanzen aus elastomerem Material herstellbar. Insbesondere zwecks leichterer Verschraubung und größerer Robustheit weist der elastomere Ring 57' einen Innenring 58 auf, den die Verschraubung durchgreift. Auch hier wird die Tragrolle 42 durch eine Verschraubung an der Tragrollenlagereinheit 41 befestigt.

Es ist selbstverständlich, daß die elastomeren Zwischenelemente 47, 57 statt am Wälzlagerinnenring auch am Wälzlageraußenring angeordnet werden können. Ebenso versteht es sich von selbst, daß auch hier Verstelleinrichtungen, die prinzipiell wie die in Fig. 4 dargestellte Verstelleinrichtung ausgebildet sind, vorgesehen werden können.

## Patentansprüche

1. Lagereinrichtung (1) für einen in einer Einrichtung zur Ermittlung der Unwucht zu lagernden Rotor mit einem an einem nichtrotierenden Abstützteil (2) angeordneten Lagerelement (5) für den Rotor, wobei unwuchtinduzierte Schwingungen des seinerseits über ortsfest gehaltene federnde Elemente abgestützten Abstützteils (2) zur Ermittlung der Unwucht herangezogen werden, **dadurch gekennzeichnet, daß** zwischen Lagerelement und einem Bereich des Abstüzteils (2) ein schwingungsdämpfendes Element (7) vorgesehen ist.

2. Lagereinrichtung nach Abspruch 1, **dadurch gekennzeichnet, daß** das schwingungsdämpfende Element ein Elastomerteil ist.

3. Lagereinrichtung nach Anspruch 1, **dadurch gekennzeichnet, daß** das schwingungsdämpfende Element als Metall-Elastomer-Verbundbauteil ausgebildet ist.

4. Lagereinrichtung nach einem der vorhergehenden Ansprüche, **dadurch gekennzeichnet, daß** das schwingungsdämpfende Element zur Einstellung einer Vorspannung definiert kraftbeaufschlagbar ist.

5. Lagereinrichtung nach einem der vorhergehenden Ansprüche, **dadurch gekennzeichnet, daß** das Lagerelement für den Rotor eine über Wälzlager gelagerte Spindelwelle (5) ist und daß zwischen dem jeweiligen Wälzlager-Außenring und dem Abstützteil bzw. zwischen dem jeweiligen Wälzlager-Innenring und dem Lagerelement ein vorzugsweise mehrteiliges schwingungsdämpfendes Element (7, 17) vorgesehen ist.

6. Lagereinrichtung nach einem der vorhergehenden Ansprüche, **dadurch gekennzeichnet, daß** das Lagerelement für den Rotor zwei über Wälzlager (43) gelagerte Tragrollen (42) umfaßt und daß zwischen dem jeweiligen Wälzlager-Außenring und dem Tragrollenring (44) bzw. dem jeweiligen Wälzlager-Innenring und dem als Tragrollenlagereinheit (41) ausgebildeten Abstützteil ein schwingungsdämpfendes Element (47, 57) vorgesehen ist.

7. Lagereinrichtung nach einem der vorhergehenden Ansprüche, **dadurch gekennzeichnet, daß** das schwingungsdämpfende Element (7, 47) zwei im Querschnitt L-förmige Ringelemente (7',7'', 47'', 47''') aufweist.

8. Lagereinrichtung nach einem der vorhergehenden Ansprüche, **dadurch gekennzeichnet, daß** das schwingungsdämpfende Element (17, 57) ein Elastomer-Ringelement (17', 57') und zwei Elastomer-Ringscheiben (17''und 17''' bzw. 57'' und 57''') umfaßt.

9. Lagereinrichtung nach einem der vorhergehenden Ansprüche, **dadurch gekennzeichnet, daß** das Lagerelement für den Rotor zwei Tragrollen (32,33) umfaßt und daß zwischen der Tragrollenlagerung und dem als Rahmen (31) ausgebildeten Abstützteil ein mehrteiliges schwingungsdämpfendes Zwischenelement (37',37'',37''') vorgesehen ist.

10. Lagereinrichtung nach Anspruch 9, **dadurch gekennzeichnet, daß** das mehrteilige schwingungsdämpfende Zwischenelement ein Zwischenelement (37') zur Abstützung in vertikaler Richtung und jeweils ein Zwischenelement (37'' bzw. 37''') zu beiden Seiten der Lagerungen (32,33) zur Abstützung in im wesentlichen horizontaler Richtung aufweist.

11. Lagereinrichtung nach Anspruch 10, **dadurch gekennzeichnet, daß** die seitlichen Zwischenelemente (37''und 37''') jeweils zwischen zwei zur Vertikalen schräg verlaufenden Abstützflächen (38) am Rahmen (31) und an der Tragrollenlagerung angeordnet sind und daß ein in vertikaler Richtung verschiebbarer Verstellkeil (40) vorgesehen ist.

12. Lagereinrichtung nach einem der Ansprüche 1 bis 4, **dadurch gekennzeichnet, daß** das schwingungsdämpfende Element in Form einer zwischen dem inneren Bereich des Abstützteils und dem äußeren Bereich des Abstützteils, an dem die federnde Abstützung angreift, angeordneten vorzugsweise zylindrischen Hülse (11) ausgebildet ist.

13. Lagereinrichtung nach einem der vorhergehenden Ansprüche, **dadurch gekennzeichnet, daß** zwischen dem Außenumfang des schwingungsdämpfenden Elements und dem Abstützteil bzw. zwischen dem Innenumfang des schwingungsdämpfenden Elements und dem Lagerelement eine Spannhülsen-Verstelleinrichtung aus zwei ineinander angeordneten und axial gegeneinander verschiebbaren Hülsen (10',10'') angeordnet ist, von denen die äußere (10'') eine geneigte Innenumfangs- und die innere (10') eine geneigte Außenumfangsfläche aufweist.

14. Lagereinrichtung nach einem der vorhergehenden Ansprüche, **dadurch gekennzeichnet, daß** das schwingungsdämpfende Element in Form eines Metall-Elastomer Verbundbauteils (47) zwei im Querschnitt L-förmige Metall-Ringelemente (47'', 47''') und einen inneren Metallring (48) umfaßt, zwischen denen ein im Querschnitt U-förmiges Elastomer-Ringelement (47') angeordnet ist.

15. Lagereinrichtung nach einem der vorhergehenden Ansprüche, **dadurch gekennzeichnet, daß** zwischen dem Innenumfang des schwingungsdämpfenden Elements (47, 57) und dem als Tragrollenlagereinheit (41) ausgebildeten Abstützteil bzw. zwischen dem Außenumfang des schwingungsdämpfenden Elements (47, 57) und dem Tragrollenring (44) eine Spannhülsen-Verstelleinrichtung aus zwei ineinander angeordneten und axial gegeneinander verschiebbaren Hülsen angeordnet ist, von denen die äußere eine geneigte Innenumfangs- und die innere eine geneigte Außenumfangsfläche aufweist.

## Claims

1. Bearing device (1) for a rotor to be mounted in a device for determining unbalance, comprising a bearing element (5) for the rotor arranged on a non-rotating support part (2), unbalance-induced vibrations of the support part (2) supported in tum via resilient elements held in a stationary manner being used for determining the unbalance, **characterised in that** a vibration damping element (7) is provided between the bearing element and a region of the support part (2).

2. Bearing device according to claim 1, **characterised in that** the vibration damping element is an elastomeric part.

3. Bearing device according to claim 1, **characterised in that** the vibration damping element is designed as a metal-elastomer composite component.

4. Bearing device according to any one of the preceding claims, **characterised in that** the vibration damping element can be force-loaded in a defined manner to adjust a preload.

5. Bearing device according to any one of the preceding claims, **characterised in that** the bearing element for the rotor is a spindle shaft (5) mounted via rolling bearings and **in that** a preferably multi-part vibration damping element (7, 17) is provided between the respective rolling bearing outer ring and the support part or between the respective rolling bearing inner ring and the bearing element.

6. Bearing device according to any one of the preceding claims, **characterised in that** the bearing element for the rotor comprises two carrier rollers (42) mounted by rolling bearings (43) and **in that** a vibration damping element (47, 57) is provided between the respective rolling bearing outer ring and the carrier roller ring (44) or the respective rolling bearing inner ring and the support part designed as a carrier roller bearing unit (41).

7. Bearing device according to any one of the preceding claims, **characterised in that** the vibration damping element (7, 47) comprises two ring elements (7', 7", 47", 47''') which are L-shaped in cross-section.

8. Bearing device according to any one of the preceding claims, **characterised in that** the vibration damping element (17, 57) comprises an elastomeric ring element (17', 57') and two elastomeric ring discs (17" and 17"' or 57' and 57"').

9. Bearing device according to any one of the preceding claims, **characterised in that** the bearing element for the rotor comprises two carrier rollers (32, 33) and **in that** a multi-part vibration damping intermediate element (37, 37", 37"') is provided between the carrier roller bearing and the support part designed as a frame (31).

10. Bearing device according to claim 9, **characterised in that** the multi-part vibration damping intermediate element comprises an intermediate element (37') for support in the vertical direction and a respective intermediate element (37" or 37''') on either side of the bearings (32, 33) for support in the substantially horizontal direction.

11. Bearing device according to claim 10, **characterised in that** the lateral intermediate elements (37" and 37"') are each arranged between two support faces (38) extending obliquely to the vertical on the frame (31) and on the carrier roller bearing and **in that** an adjusting wedge (40) which can be displaced in the vertical direction is provided.

12. Bearing device according to any one of claims 1 to 4, **characterised in that** the vibration damping element is designed in the form of a preferably cylindrical sleeve (11) arranged between the inner region of the support part and the outer region of the support part on which the resilient support engages.

13. Bearing device according to any one of the preceding claims, **characterised in that** a clamping sleeve adjusting device made of two sleeves (10', 10") which can be axially displaced against one another and are arranged in one another is arranged between the outer periphery of the oscillation damping element and the support part or between the inner periphery of the vibration damping element and the bearing element, of which sleeves (10', 10") the outer sleeve (10") has an inclined inner peripheral face and the inner sleeve (10') has an inclined outer peripheral face.

14. Bearing device according to any one of the preceding claims, **characterised in that** the vibration damping element in the form of a metal-elastomer composite component (47) comprises two metal ring elements (47", 47"') which are L-shaped in cross-section and an inner metal ring (48), between which an elastomeric ring element (47') which is U-shaped in cross-section is arranged.

15. Bearing device according to any one of the preceding claims, **characterised in that** a clamping sleeve adjusting device made of two sleeves which can be axially displaced against one another and are arranged in one another is arranged between the inner periphery of the vibration damping element (47, 57) and the support part designed as a carrier roller bearing device (41) or between the outer periphery of the vibration damping element (47, 57) and the carrier roller ring (44), of which sleeves, the outer sleeve has an inclined inner peripheral face and the inner sleeve has an inclined outer peripheral face.

## Revendications

1. Dispositif de support (1) pour un rotor à monter dans un dispositif de détermination du balourd, comportant un élément de support (5) disposé sur une partie d'appui (2) non tournante, pour le rotor, les oscillations induites par le balourd de la partie d'appui (2), soutenu de son côté par des éléments élastiques maintenus fixement, étant utilisées pour déterminer le balourd, **caractérisé en ce qu'**entre l'élément de support et une zone de la partie d'appui (2) est prévu un élément (7) amortissant les oscillations.

2. Dispositif de support selon la revendication 1, **caractérisé en ce que** l'élément amortissant les oscillations est une pièce élastomère.

3. Dispositif de support selon la revendication 1, **caractérisé en ce que** l'élément amortissant les oscillations est réalisé en tant que composant composite en métal et élastomère.

4. Dispositif de support selon l'une des revendications précédentes, **caractérisé en ce que** l'élément amortissant les oscillations peut être soumis à une force définie pour le réglage d'une précontrainte.

5. Dispositif de support selon l'une des revendications précédentes, **caractérisé en ce que** l'élément de support pour le rotor est un arbre de broche (5) supporté par des paliers de roulement et **en ce qu'**entre la bague extérieure respective du palier de roulement et la partie d'appui ou bien entre la bague intérieure respective du palier de roulement et l'élément de support, il est prévu un élément (7, 17) amortissant les oscillations, de préférence en plusieurs parties.

6. Dispositif de support selon l'une des revendications précédentes, **caractérisé en ce que** l'élément de support pour le rotor comprend deux rouleaux porteurs (42) montés dans des paliers de roulement (43), et **en ce qu'**entre la bague extérieure effective du palier de roulement et la bague du rouleau porteur (44) ou la bague intérieure respective du palier de roulement et la partie d'appui, réalisée en tant qu'unité de palier à rouleaux porteurs (41), il est prévu un élément (47, 57) amortissant les oscillations.

7. Dispositif de support selon l'une des revendications précédentes, **caractérisé en ce que** l'élément (7, 47) amortissant les oscillations comporte deux éléments annulaires (7', 7", 47", 47'") de section transversale en L.

8. Dispositif de support selon l'une des revendications précédentes, **caractérisé en ce que** l'élément (17, 57) amortissant les oscillations comprend un élément annulaire en élastomère (17', 57') et deux disques annulaires en élastomère (17", 17"', respectivement 57" et 57"').

9. Dispositif de support selon l'une des revendications précédentes, **caractérisé en ce que** l'élément de support pour le rotor comprend deux rouleaux porteurs (32, 33) et **en ce qu'**entre le palier à rouleaux porteurs et la partie d'appui réalisée en tant que cadre (31), il est prévu un élément intermédiaire (37', 37", 37"') amortissant les oscillations, en plusieurs parties.

10. Dispositif de support selon la revendication 9, **caractérisé en ce que** l'élément intermédiaire amortissant les oscillations, en plusieurs parties, comporte un élément intermédiaire (37') pour l'appui dans la direction verticale et un élément intermédiaire (37", respectivement 37"') sur chacun des deux côtés des paliers (32, 33), pour l'appui dans la direction sensiblement horizontale.

11. Dispositif de support selon la revendication 10, **caractérisé en ce que** les éléments intermédiaires (37", 37"') latéraux sont disposés chacun entre deux surfaces d'appui (38), s'étendant obliquement par rapport à la verticale, sur le cadre (31), et sur le palier à rouleaux porteurs, et **en ce qu'**il est prévu un coin de réglage (40) pouvant coulisser dans la direction verticale.

12. Dispositif de support selon l'une des revendications 1 à 4, **caractérisé en ce que** l'élément amortissant les oscillations est réalisé sous la forme d'une douille (11), de préférence cylindrique, disposée entre la zone intérieure de la partie d'appui et la zone extérieure de la partie d'appui sur laquelle agit l'appui élastique.

13. Dispositif de support selon l'une des revendications précédentes, **caractérisé en ce qu'**entre le pourtour extérieur de l'élément amortissant les oscillations et la partie d'appui, ou entre le pourtour intérieur de l'élément amortissant les oscillations et l'élément de support, il est disposé un dispositif de réglage à douilles de serrage constitué de deux douilles (10', 10") disposées l'une dans l'autre et pouvant coulisser axialement l'une par rapport à l'autre, dont la douille extérieure (10") présente une surface périphérique intérieure inclinée et la douille intérieure (10') une surface périphérique extérieure inclinée.

14. Dispositif de support selon l'une des revendications précédentes, **caractérisé en ce que** l'élément amortissant les oscillations sous la forme d'un composant composite (47) en métal et élastomère, comprend deux éléments annulaires en métal (47", 47"') de section transversale en L, et une bague métallique intérieure (48), entre lesquels est disposé un élément annulaire en élastomère (47') de section transversale en U.

15. Dispositif de support selon l'une des revendications précédentes, **caractérisé en ce qu'**entre le pourtour intérieur de l'élément (47, 57) amortissant les oscillations et la partie d'appui, réalisée en tant qu'unité de palier à rouleaux porteurs (41), ou entre le pourtour extérieur de l'élément (47, 57) amortissant les oscillations et la bague (44) du rouleau porteur, est disposé un dispositif de réglage à douilles de serrage constitué de deux douilles disposées l'une dans l'autre et pouvant coulisser axialement l'une par rapport à l'autre, dont la douille extérieure présente une surface périphérique intérieure inclinée et la douille intérieure une surface périphérique extérieure inclinée.
